# DEMANDE DE BREVET EUROPEEN

(11) **EP 1 349 415 A1**
(43) Date de publication de la demande: **01.10.2003**
(21) Numéro de dépôt: 03290740.4
(22) Date de dépôt: 24.03.2003
(51) Int. Cl.: H04Q 7/38

(54) **Méthode d'établissement d'un appel de groupe dans un système de télécommunication de type GPRS**

(30) Priorité: 25.03.2002 FR 0203860
(71) Demandeur: SAGEM S.A., 75015 Paris (FR)
(72) Inventeur: Seux, Emmanuel, 95800 Cergy le Haut (FR)
(74) Mandataire: Maillet, Alain

(57) **Abrégé**

L'invention concerne une méthode d'établissement d'un appel de groupe dans un système de télécommunication de type GPRS, ledit appel étant destiné à un groupe donné d'utilisateurs. Si l'un desdits utilisateurs est en communication en mode paquet, la station de base qui le sert lui signale ledit appel de groupe en lui transmettant un message d'appel point à point (Paging Request) sur un canal de signalisation (PACCH) relatif au mode paquet.

## Description

La présente invention concerne de manière générale une méthode d'établissement d'un appel de groupe dans un système de télécommunication du type GPRS (General Packet Radio Service).

Le système de télécommunication mobile GSM, basé sur la commutation de circuit a évolué en intégrant une technique de commutation par paquets, connue sous le nom de GPRS. Le GPRS permet notamment aux terminaux mobiles l'accès aux services Internet grâce à l'utilisation de multiples canaux radio attribués à un utilisateur ou partagés par une pluralité d'utilisateurs.

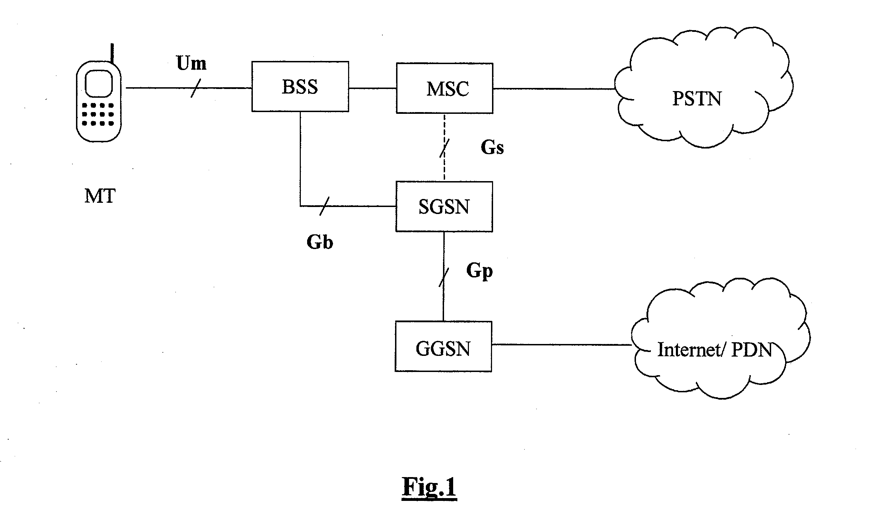

La Fig. 1 illustre de manière schématique un système de télécommunication GPRS. Le système comporte deux noeuds supplémentaires par rapport à un réseau GSM classique, à savoir les noeuds SGSN et GGSN. Le noeud SGSN (pour Serving GPRS Support Node), placé au même niveau hiérarchique que le centre de commutation MSC (Mobile Switching Center), est chargé de gérer les abonnés mobiles actifs et d'assurer le relais des paquets de données. Le noeud GGSN (pour Gateway GPRS Support Node) assure quant à lui l'interconnexion avec les réseaux de données par commutation de paquets (Packet Data Network, réseau Internet) extérieurs au réseau GSM. L'interface entre une station de base (BSS) et un noeud SGSN est conventionnellement notée Gb, celle entre un noeud SGSN et un centre MSC, Gs.

Différentes classes de terminaux mobiles (MT) sont supportées par le GPRS : la classe A permet d'accéder simultanément aux services GSM et GPRS, la classe B permet d'accéder à un instant donné soit aux services GSM soit aux services GPRS tout en autorisant la surveillance des canaux de contrôle tant GSM que GPRS, la classe C ne permet d'accéder qu'aux services GPRS. Nous considérerons par la suite uniquement les terminaux mobiles de type B, sauf indication contraire.

Le service GSM classique permet la transmission de la voix sur une liaison téléphonique point à point. La norme GSM prévoit également des liaisons point à multipoint permettant des appels de groupe. On distingue deux types d'appel de groupe, l'appel VBS (pour Voice Broadcast Service) défini dans la spécification GSM 02.69 et l'appel VGCS (pour Voice Group Call Service) défini dans la spécification GSM 02.68, toutes deux disponibles sous le site www.3gpp.org. Un appel de type VBS ou VGCS permet de transmettre un signal de voix à une pluralité d'abonnés à ces services respectifs, situés dans une zone géographique donnée. Alors que le service VBS ne permet qu'une communication unidirectionnelle, le service VGCS autorise une communication en mode half-duplex.

Un appel de groupe pour une zone géographique donnée est caractérisée par une référence d'appel de groupe dénommée GCR (Group Call Reference) dans le cadre du service VBS ou du service VGCS. Une référence d'appel de groupe est composée d'un identifiant de groupe d'abonnés (Group ID) et d'un identifiant de zone géographique (Group Call Area ID). La composition du Group ID et du Group Call Area ID est laissée à la discrétion de l'opérateur du réseau.

Considérons maintenant un terminal mobile dont l'utilisateur est abonné à un service d'appel de groupe. La procédure d'établissement de l'appel diffère selon que le terminal mobile est inactif ou en communication.

Lorsque le mobile est inactif, il est averti d'un appel incident au moyen d'un message de « paging request » comme défini au paragraphe 9.1.22 de la spécification TS 04.08 de la norme GSM. Ce message est transmis par le réseau au mobile sur le canal de signalisation commun CCCH (Common Control Channel). Il contient d'une part un numéro de liste de notification ou NLN (pour Notification List Number) et un niveau de priorité tel que prévu dans le service de préemption et de précédence eMLPP (pour enhanced Multi-Level Precedence and Pre-emption) défini dans la spécification 3G TS 22.067. Le service eMLPP comprend en fait deux parties l'attribution d'un niveau de priorité à un appel et la préemption des communications de moindre niveau de priorité. Lorsque le terminal mobile est en communication, la préemption peut entraîner ou non la déconnexion automatique de la communication en cours. Le terminal mobile ayant identifié un numéro de notification NLN au moyen du message « paging request », détermine s'il diffère du dernier numéro de notification précédemment reçu. Dans l'affirmative, le terminal mobile lit sur le canal NCH (Notification CHannel) la liste des références des appels de groupe correspondant au numéro de notification NLN. Plus précisément, si les appels de groupe sont par exemple de type VGCS, la séquence suivante est disponible sur le canal NCH :
NLN(start); GCR(1); GCR(2);... ; GCR(n); NLN(end);
où NLN(start) et NLN(end) sont respectivement des marqueurs de début et de fin, codés sur 2 bits, ayant tous deux pour valeur le numéro de notification NLN courant. La séquence est transmise sur plusieurs trames TDMA. Les GCR(*i*), *i*=1,..,n sont les références des appels pour tous les groupes actifs. Le terminal mobile lit à partir du marqueur de début de liste NLN(start) jusqu'au marqueur de fin de liste NLN(end) la liste des références des appels de groupe VGCS et/ou VBS en cours. La notification indique pour chaque référence, au moyen d'un drapeau, s'il s'agit d'un appel de type VBS ou de type VGCS. La notification peut également indiquer directement pour une référence donnée, le canal de l'appel VBS ou VGCS correspondant. Une description complète du format de la notification est fournie au paragraphe 9.1.21.b de la spécification TS 04.08 de la norme GSM. A partir des références des appels de groupe actifs récupérés à partir de la notification, le terminal mobile propose à l'utilisateur de recevoir tel ou tel appel. L'utilisateur établit ou non la communication. Alternativement, et notamment en cas d'appel d'urgence, la communication pourra être automatiquement établie.

Lorsque le mobile est en communication, la procédure d'établissement d'un appel de groupe est différente. Le terminal mobile reçoit sur le canal de signalisation associé FACCH (Fast Associated Control CHannel) une notification à chaque nouvel appel. Cette notification comprend, entre autres, la référence de l'appel de groupe, le type de l'appel (VGCS, VBS) et, le cas échéant, son niveau de priorité. L'appel de groupe peut être simplement présenté par le terminal mobile à l'utilisateur ou bien, en cas d'urgence, peut préempter purement et simplement la communication en cours.

Une application importante des services d'appel de groupe est la signalisation ferroviaire. Un certain nombre de constructeurs de téléphones mobiles ont entrepris de faire évoluer la norme GSM vers une nouvelle norme dénommée GSM-R (ou GSM for Railway communications) prenant en compte les besoins spécifiques de cette signalisation. Conjointement, les sociétés ferroviaires s'efforcent de normaliser la signalisation dans le cadre du projet européen ERTMS (European Rail Traffic Management System). Un exemple typique d'appel de groupe est celui d'un appel d'urgence émis par un conducteur de train à l'intention d'une équipe de maintenance sur la voie. Cet appel doit interrompre les communications en cours et diffuser un message à tous les utilisateurs concernés. Si les spécifications actuelles de la norme GSM permettent, comme on l'a vu plus haut, de réaliser un appel de groupe (avec le cas échéant préemption des communications en cours) lorsque les terminaux mobiles appelés sont inactifs ou en mode de transmission GSM seul, rien n'est prévu en revanche lorsque lesdits terminaux sont en mode de transmission par paquets (mode GPRS).

Un des objectifs de l'invention est de prévoir une méthode d'établissement d'appel de groupe lorsque le terminal mobile est en communication en mode paquet.

Le problème est résolu par l'objet de l'invention, défini comme une méthode d'établissement d'un appel de groupe dans un système de télécommunication de type GPRS, ledit appel étant destiné à un groupe donné d'utilisateurs, selon laquelle, si l'un desdits utilisateurs est en communication en mode paquet, la station de base qui le sert lui signale ledit appel de groupe en lui transmettant un message d'appel point à point sur un canal de signalisation relatif au mode paquet.

Selon une variante, ledit canal de signalisation est un canal dédié.

Avantageusement, ledit message contient une information caractéristique du niveau de priorité de l'appel de groupe.

Avantageusement, message comprend un numéro de notification, ledit numéro de notification étant modifié à chaque nouvel appel de groupe.

Selon un premier mode de réalisation, lorsqu'un terminal mobile reçoit ledit message d'appel point à point, la communication en mode paquet est suspendue.

Selon un second mode de réalisation, lorsqu'un terminal mobile reçoit ledit message d'appel point à point, le terminal compare le niveau de priorité de l'appel de groupe au niveau de priorité de la communication en cours, la communication en mode paquet étant alors suspendue si celui-ci est inférieur à celui-là.

La communication ayant en mode paquet ayant été suspendue, le terminal pourra alors lire sur un canal de signalisation commun relatif au mode circuit, une notification associée au numéro de notification contenu dans ledit message.

Avantageusement, ladite notification contient une liste de références des appels de groupe en cours.

La référence de chaque appel de groupe en cours comprend typiquement un identificateur du groupe appelé ainsi qu'un identificateur de la zone dans laquelle ledit appel doit être signalé.

Le terminal mobile détermine alors à partir de ladite liste de références, l'appel de groupe en cours dont il est destinataire et signale ce dernier au moyen d'un avertissement visuel et/ou sonore.

Alternativement, le terminal mobile détermine à partir de ladite liste de références, l'appel de groupe en cours dont il est destinataire et qu'une communication en mode circuit est établie avec l'auteur de cet appel.

Les caractéristiques de l'invention mentionnées ci-dessus, ainsi que d'autres, apparaîtront plus clairement à la lecture de la description suivante de modes de réalisation, ladite description étant faite en relation avec les dessins joints, parmi lesquels :
La Fig. 1 illustre schématiquement un système de télécommunication GPRS ;
Les Figs. 2A et 2B illustrent schématiquement une procédure d'établissement d'un appel de groupe entrant en mode GPRS, selon un exemple de réalisation de l'invention.

Considérons à nouveau un terminal mobile MS de classe B dans un système de télécommunication GPRS.

Si le terminal mobile est inactif, il sera averti d'un appel de groupe incident au moyen d'un message de « Paging Request » sur le canal CCCH comme dans l'état de la technique. Si le mobile entre dans une zone où des appels de groupe sont en cours, il pourra en prendre connaissance en lisant la séquence des références des appels sur le canal NCH.

En revanche, si le terminal mobile est en communication en mode paquet (mode GPRS), par exemple s'il est en cours de navigation sur Internet ou de téléchargement FTP d'un fichier, il n'a pas accès (mode B) aux canaux CCCH et NCH et donc n'a pas moyen de connaître directement les appels de groupe en cours ou ceux incidents.

Il est proposé selon l'invention, lorsqu'un appel de groupe survient, de signaler des pseudo appels point à point à tous les terminaux mobiles du groupe concerné.

La norme GSM prévoit d'ores et déjà que, lorsqu'un terminal mobile est en communication en mode paquet et que l'on veut lui signaler un appel point à point incident, un message dit « Packet Paging Request » est envoyé sur le canal de signalisation dédié PAACH (Packet Associated Control CHannel).

Ce message « Packet Paging Request » comprend les informations suivantes :
- le numéro de liste de notification NLN
- l'identificateur temporaire d'abonné pour une communication en mode paquet PTMSI (Packet Temporary Mobile Subscriber Identity)
- l'identificateur temporaire d'abonné pour une communication en mode circuit TMSI (Temporary Mobile Subscriber Identity)
- le niveau de priorité de l'appel incident (eMLPP)

Le format détaillé du message « Packet Paging Request » est défini au paragraphe 11.2.10 de la spécification TS 04.60 de la norme.

A chaque nouvel appel de groupe le numéro NLN est modifié et le champ eMLPP est renseigné en fonction du niveau de priorité de l'appel.

Lorsqu'un terminal mobile reçoit un message « Packet Paging Request », il recherche la valeur du numéro NLN et détermine si cette valeur a changé depuis le dernier message « Packet Paging Request » précédemment reçu.

Une variation du numéro NLN peut être due aux circonstances suivantes :
- un appel de groupe de type VBS/VGCS survient alors que le terminal mobile est dans une zone géographique donnée et en communication en mode paquet. Les pseudo appels point à point sont signalés aux utilisateurs du groupe en question au moyen de messages « Packet Paging Request » sur les canaux PAACH, portant tous le même numéro NLN et le même numéro de priorité eMLPP ;
- un appel de groupe de type VBS/VGCS est déjà établi dans une zone donnée et le terminal mobile, en communication en mode paquet, pénètre dans ladite zone.

Lorsqu'un appel de groupe est détecté par un terminal mobile, qu'il s'agisse d'un appel incident, ou que le terminal mobile pénètre dans une zone où un appel de groupe est déjà établi, la communication en mode paquet est suspendue. Selon une variante, si l'appel détecté est de priorité inférieure à celle de la communication en cours, l'appel pourra être masqué et le transfert des paquets se poursuivra normalement.

Si la communication est suspendue, le terminal peut lire la liste des références des appels de groupe en cours sur le canal NCH et déterminer l'appel qui le concerne. L'appel est alors proposé à l'utilisateur et ce dernier est libre de le refuser ou de l'accepter.

S'il le refuse, la communication en mode paquet reprend son cours normalement. A l'inverse, s'il l'accepte, la communication en mode paquet est suspendue et une communication en mode circuit est établie avec l'auteur de l'appel. Au terme de la communication en mode circuit, le transfert en mode paquet reprend son cours.

Alternativement, on pourra prévoir, par exemple lorsqu'il s'agit d'un appel d'urgence (ou de priorité maximale) que le choix ne sera pas laissé à l'utilisateur : les ressources de la communication seront alors automatiquement préemptées et la communication en mode circuit directement établie.

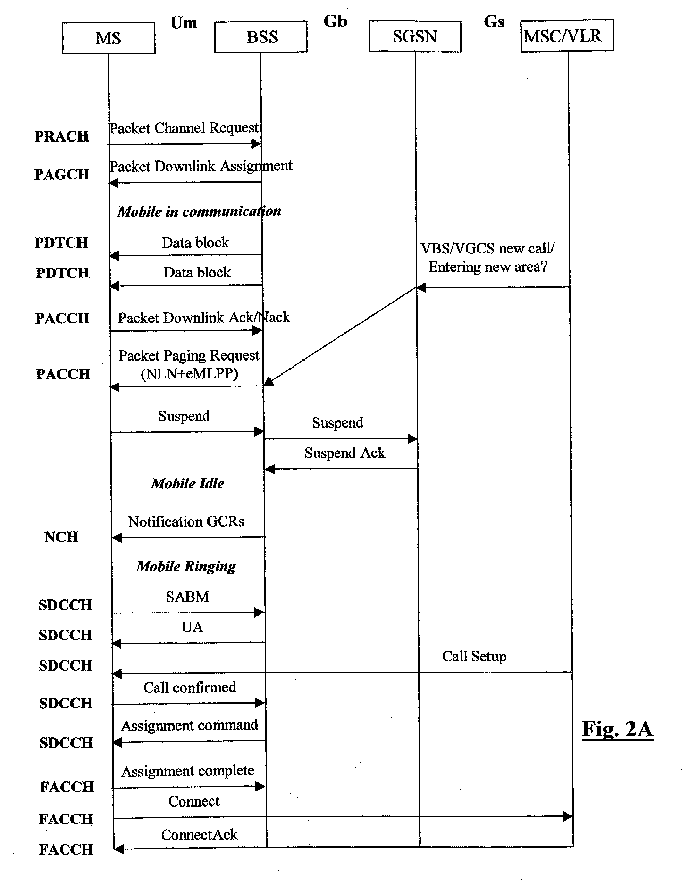

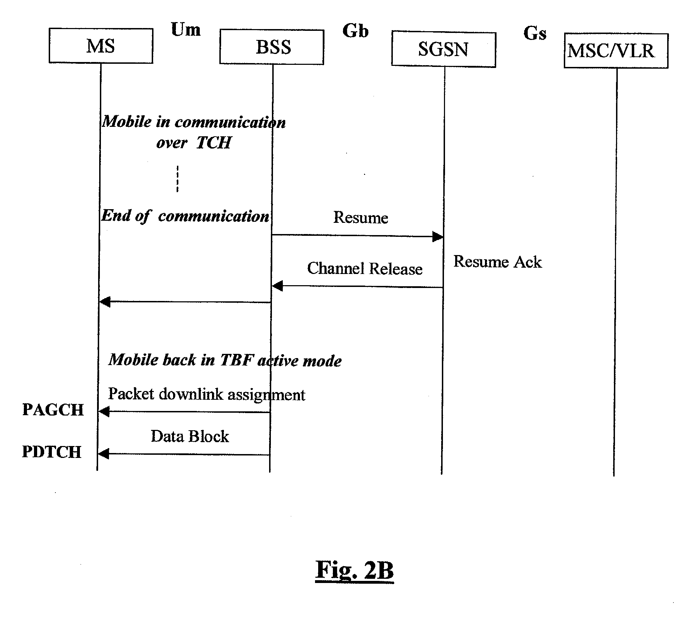

Les Figs. 2A et 2B illustrent la procédure d'établissement d'un appel de groupe lorsque le terminal mobile est en communication en mode paquet et plus précisément les échanges de messages entre le terminal mobile MS, la station de base BSS, le noeud SGSN et le centre MSC/VLR. On a fait figurer à gauche des figures les différents canaux GPRS utilisés. On trouvera une description des différents canaux dans la spécification 3GPP TS 03.64 de la norme.

On a rappelé pour mémoire en haut de la Fig. 2A la procédure d'établissement d'un communication en mode paquet. Si l'appel est à l'initiative du terminal mobile une requête « Packet Channel Request » est transmis sur le canal PRACH (Packet Random Acess CHannel) pour demander un accès paquet. La station de base retourne au terminal mobile sur le canal PAGCH (Packet Access Grant CHannel) un message d'allocation de ressources. La communication en mode paquet est alors établie et les paquets sont transmis par la station de base sur le canal dédié PDTCH (Packet Data Traffic CHannel). A chaque réception de paquet, le terminal renvoie un message d'acquittement sur le canal de signalisation associé PAACH (Packet Associated Control CHannel).

Si un appel de groupe VBS/ VGCS survient, le noeud SGSN en est averti via le centre MSC. Le noeud SGSN demande alors à la station de base de signaler un pseudo appel point à point à chaque utilisateur du groupe concerné. Pour ce faire, un message « Packet Paging Request » est transmis sur le canal PACCH de l'utilisateur.

Le terminal mobile suspend alors la communication en mode paquet en cours.

Selon une variante de réalisation, le terminal mobile ne suspend la communication en mode paquet en cours que si l'appel incident présente un niveau de priorité supérieur à celui de la communication en cours. Ce mode de réalisation présente l'avantage de ne pas ralentir indûment le transfert des paquets par la prise en compte d'appels de groupe de faible priorité.

La procédure de suspension est identique à celle effectuée lorsque survient un appel point à point : une requête « Suspend » est transmise à la station de base qui retourne au terminal mobile un acquittement « Suspend Ack». Les paquets à destination du terminal sont alors bufferisés

La communication suspendue, le terminal mobile, devenu inactif, lit sur le canal NCH la liste des références de groupe GCR associée au numéro NLN du message « Packet Paging Request » qu'il vient de recevoir. Il connaît ainsi l'appel de groupe qui le concerne et le propose à l'utilisateur au moyen d'un avertissement sonore et/ou visuel. Alternativement, l'étape de proposition est omise (par exemple pour un appel d'urgence) et la réception de l'appel est forcée.

Si l'utilisateur décide d'accepter l'appel de groupe ou si la réception est forcée, une communication en mode circuit est établie. L'établissement de la communication se fait par l'émission d'une commande SABM (Set Asynchronous Balanced Mode) suivie d'une réponse UA (Unumbered Acknowledgement) sur le canal SDCCH (Stand-Alone Dedicated CHannel). Les ressources sont allouées par la station de base au moyen d'une commande « Assignment command» sur ce même canal. Un acquittement « Assignment acknowledge » est ensuite transmis par le terminal mobile sur le canal FACCH. La liaison est établie par l'envoi à la station de base d'un message « Connect » sur le canal FACCH et le retour d'un acquittement correspondant « ConnectAck ». La communication en mode circuit emprunte le canal TCH (Traffic CHannel) de manière conventionnelle.

Au terme de la communication en mode circuit, une procédure de reprise de la communication en mode paquet suspendue est lancée par la station de base. A cette fin, elle transmet un message « Resume » au noeud SGSN qui lui retourne un acquittement de libération de canal « Channel Release », répercuté au terminal mobile. Les ressources pour la communication en mode paquet sont alors réallouées par la station de base au moyen d'un message « Packet downlink assignment » et le transfert en mode paquet peut reprendre son cours (Temporary Block Flow actif) au point où il avait été suspendu.

On notera que les procédures de suspension de la communication en mode paquet, d'établissement de la communication en mode circuit et de reprise sont identiques à celles mises en oeuvre lorsque survient un appel incident point à point.

## Revendications

1. Méthode d'établissement d'un appel de groupe dans un système de télécommunication de type GPRS, ledit appel étant destiné à un groupe donné d'utilisateurs, **caractérisée en ce que** si l'un desdits utilisateurs est en communication en mode paquet, la station de base qui le sert lui signale ledit appel de groupe en lui transmettant un message d'appel point à point (Paging Request) sur un canal de signalisation (PACCH) relatif au mode paquet.

2. Méthode d'établissement d'un appel de groupe selon la revendication 1, **caractérisée en ce que** ledit canal de signalisation est un canal dédié (PACCH).

3. Méthode d'établissement d'un appel de groupe selon la revendication 1 ou 2, **caractérisée en ce que** ledit message contient une information caractéristique (eMLPP) du niveau de priorité de l'appel de groupe.

4. Méthode d'établissement d'un appel de groupe selon l'une des revendications précédentes, **caractérisée en ce que** ledit message comprend un numéro de notification, ledit numéro de notification étant modifié à chaque nouvel appel de groupe.

5. Méthode d'établissement d'un appel de groupe selon la revendication 4, **caractérisée en ce que** lorsqu'un terminal mobile reçoit ledit message d'appel point à point, la communication en mode paquet est suspendue.

6. Méthode d'établissement d'un appel de groupe selon les revendications 3 et 4, **caractérisée en ce que** lorsqu'un terminal mobile reçoit ledit message d'appel point à point, le terminal compare le niveau de priorité de l'appel de groupe au niveau de priorité de la communication en cours, la communication en mode paquet étant alors suspendue si celui-ci est inférieur à celui-là.

7. Méthode d'établissement d'un appel de groupe selon la revendication 5 ou 6, **caractérisée en ce que**, la communication ayant en mode paquet ayant été suspendue, le terminal lit sur un canal de signalisation commun (NCH) relatif au mode circuit, une notification associée au numéro de notification contenu dans ledit message.

8. Méthode d'établissement d'un appel de groupe selon la revendication 7, **caractérisée en ce que** ladite notification contient une liste de références (GCR) des appels de groupe en cours.

9. Méthode d'établissement d'un appel de groupe selon la revendication 8, **caractérisée en ce que** la référence de chaque appel de groupe en cours comprend un identificateur (Group ID) du groupe appelé ainsi qu'un identificateur de la zone (Group Call ID) dans laquelle ledit appel doit être signalé.

10. Méthode d'établissement d'un appel de groupe selon la revendication 8 ou 9 **caractérisée en ce que** le terminal mobile détermine à partir de ladite liste de références, l'appel de groupe en cours dont il est destinataire et signale ce dernier au moyen d'un avertissement visuel et/ou sonore.

11. Méthode d'établissement d'un appel de groupe selon la revendication 8 ou 9 **caractérisée en ce que** le terminal mobile détermine à partir de ladite liste de références, l'appel de groupe en cours dont il est destinataire et qu'une communication en mode circuit est établie avec l'auteur de cet appel.
